# EUROPÄISCHE PATENTANMELDUNG

(11) **EP 4 498 566 A1**
(43) Veröffentlichungstag der Anmeldung: **29.01.2025**
(21) Anmeldenummer: 24182009.1
(22) Anmeldetag: 13.06.2024
(51) Int. Cl.: H02J 7/00, B60L 58/27

(54) **VERFAHREN ZUM HEIZEN EINER FAHRZEUGBATTERIE EINES FAHRZEUGS WÄHREND DER FAHRT**

(30) Priorität: 07.07.2023 DE 102023206499
(71) Anmelder: VOLKSWAGEN AG, 38440 Wolfsburg (DE)
(72) Erfinder: Henkenius, Dr. Carsten, 34431 Marsberg/Udorf (DE); Schaar, Dr. Bastian, 38116 Braunschweig (DE)

(57) **Zusammenfassung**

Die Erfindung betrifft ein Verfahren zum Heizen einer Fahrzeugbatterie (51) eines Fahrzeugs (50) mit einer E-Maschine (52), wobei während einer Fahrt des Fahrzeuges (50) einem von dem Pulswechselrichter (2) bereitgestellten Antriebsstrom durch den Pulswechselrichter (2) der Antriebsstrom (i) gewählt wird.

Ein fahrzustandsunabhängiges Batterieheizverfahren wird dadurch bereitgestellt, dass der Antriebsstrom (i) in Abhängigkeit eines vorgegebenen Drehmomentes (T) und durch

Vorgabe einer in einem Magnetfeld der E-Maschine gespeicherten Energie (E) so gewählt wird, dass die gespeicherte Energie (E) im Magnetfeld variiert wird und so ein pulsierender Heizstrom zwischen der Fahrzeugbatterie (51) und der E-Maschine (52) erzeugt wird, ohne dass das Drehmoment (T) verändert wird.

## Beschreibung

Die Erfindung betrifft ein Verfahren zum Heizen einer Fahrzeugbatterie eines Fahrzeugs mit den Merkmalen des Oberbegriffes des Patentanspruchs 1.

Batteriezellen von Fahrzeugbatterien haben bei niedrigen Temperaturen des internen Aktivmaterials eine stark eingeschränkte Entlade- und Ladeleistung. Die Fahr- und Ladeleistung von Elektrofahrzeugen ist niedrig, wenn die Fahrzeugbatterie, insbesondere in Form einer Hochvoltbatterie, bspw. nach langer Standzeit ausgekühlt ist. Außen an der Fahrzeugbatterie angeordnete Heizelemente oder Heizvorrichtungen können zwar Abhilfe schaffen, erwärmen jedoch zunächst nur das Batterie- bzw. Zellgehäuse. Eine Temperatur des innenliegenden Aktivmaterials der Zellen beginnt hingegen zeitverzögert nach Erwärmung des Batterie- und Zellengehäuses anzusteigen. Das Heizen ist darüber hinaus aufgrund der Wärmeverluste bei der Erwärmung des Zellgehäuses ineffektiv, sodass sich insgesamt eine nicht ausreichende Heizwirkung ergibt.

Aus der US2012/002 9724A1 ist ein Verfahren und ein System zur Steuerung der Temperatur einer Fahrzeugbatterie bekannt. Das Fahrzeug ist dazu mit einem Erwärmungs- und Kühlsystem ausgestattet, wobei dieses Erwärmungs- und Kühlsystem mit der Fahrzeugbatterie über Fluidleitungen verbunden ist. Über diese Fluidleitung wird ein gekühltes oder erwärmtes Fluid transportiert. Eine Steuerungseinrichtung steuert das Erwärmungs- und Kühlsystem, wobei die Fahrzeugbatterie mittels Sensoren überwacht wird. Die Steuerungseinrichtung ist so ausgestaltet, dass die Temperatur der Fahrzeugbatterie innerhalb eines vorgegebenen Bereiches gehalten wird. Dieser vorgegebene Bereich ist abhängig von dem Ladezustand und der verbleibenden Lebensdauer der Batterie.

Aus der US2022/0080858A1 sind ein Heizverfahren zum Heizen einer Fahrzeugbatterie und einer Anordnung zum Heizen einer Fahrzeugbatterie bekannt. Wenn die Temperatur der Fahrzeugbatterie einen unteren Grenzwert unterschreitet wird ein Drei-Phasen-Inverter so angesteuert, so dass ein Drei-Phasen-Strom-Motor Wärme erzeugt und diese Wärme an ein Kühlmittel abgibt, das durch die Fahrzeugbatterie fließt. Hierbei wird nur ein geringes Drehmoment erzeugt das an einer Motorwelle anliegt. Dieses Drehmoment soll nicht geeignet sein, dass sich das Fahrzeug bewegt oder Teile oder Komponenten des Antriebsstrangs beschädigt. Das geringe Drehmoment soll den Antriebsstrang lediglich vorspannen. Dieses Heizverfahren ist nur anwendbar, wenn das Fahrzeug steht, während der Fahrt des Fahrzeugs wird das Heizverfahren nicht angewendet.

Dieser gattungsbildende Stand der Technik hat den Nachteil, dass die Heizfunktion nur bei stillstehendem Fahrzeug aktiviert werden kann, da die Funktionsrealisierung eine ungewollte Drehmomentbildung der E-Maschine während der Fahrt nicht ausschließt. Diese Heizfunktion ist deshalb nur eingeschränkt nutzbar.

Der Erfindung liegt daher die Aufgabe zugrunde ein fahrzustandsunabhängiges Batterieheizverfahren bereitzustellen und das gattungsbildende Verfahren zu verbessern.

Diese der Erfindung zugrunde liegende Aufgabe wird nun durch ein Verfahren mit den Merkmalen des Patentanspruches 1 gelöst.

Die Erfindung betrifft ein Verfahren zum Heizen einer Fahrzeugbatterie eines Fahrzeugs mit einer E-Maschine, wobei während einer Fahrt des Fahrzeuges einem von dem Pulswechselrichter bereitgestellten Antriebsstrom durch den Pulswechselrichter der Antriebsstrom gewählt wird. Erfindungsgemäß wird der Antriebsstrom in Abhängigkeit eines vorgegebenen Drehmomentes und einer in einem Magnetfeld der E-Maschine gespeicherten Energie so variiert, dass die gespeicherte Energie im Magnetfeld variiert wird und so ein pulsierender Heizstrom zwischen der Batterie und der E-Maschine erzeugt wird, ohne dass das Drehmoment verändert wird.

Ferner wird insbesondere eine Anordnung zum Heizen einer Fahrzeugbatterie eines Fahrzeugs mit einer E-Maschine geschaffen, umfassend einen mit der Fahrzeugbatterie verbundenen oder verbindbaren Pulswechselrichter, und eine Pulswechselrichtersteuerung, die zum Ansteuern des Pulswechselrichters eingerichtet ist, wobei die Pulswechselrichtersteuerung dazu eingerichtet ist, zum Heizen der Fahrzeugbatterie während einer Fahrt des Fahrzeuges einem von dem Pulswechselrichter bereitgestellten Antriebsstrom durch den Pulswechselrichter der Antriebsstrom derart gewählt wird, dass ein pulsierender Heizstrom zwischen der Batterie und der E-Maschine erzeugt wird, ohne dass das Drehmoment erhöht wird.

Hierbei wird im Vorhinein eine Kennlinie konstanten Drehmoments bestimmt. Es wird nun ein Punkt der Kennlinie bestimmt, wobei an diesem Punkt eine niedrige im Magnetfeld gespeicherte Energie, insbesondere ein Minimum an im Magnetfeld gespeicherter Energie, für das gegebene Drehmoment vorliegt. Ferner wird ein weiterer Punkt auf der Kennlinie bestimmt, wobei an diesem weiteren Punkt eine höhere im Magnetfeld gespeicherte Energie, insbesondere ein Maximum am im Magnetfeld gespeicherter Energie vorliegt.

Die Kennlinie wird nun periodisch durch Vorgabe der unterschiedlichen Energiewerte abgefahren um so den Antriebsstrom zu erhalten. Der Antriebsstrom wird vorzugsweise als Längs- und Querstrom angegeben. Das Verhalten der Antriebsmaschine wird bei diesem Verfahren durch transformierte Statorgrößen beschrieben. Diese transformierten Statorgrößen werden durch eine d/q-Transformation bestimmt. Die Punkte der Kennlinie können jeweils durch eine Längs- und Querstromkombination beschrieben werden. Der Längs- und Querstrom der E-Maschine bezeichnen dabei Statorstromkomponenten in den beiden orthogonalen Richtungen eines feldorientierten Bezugssystems. Die d-Richtung entspricht der Längsrichtung und die q-Richtung entspricht der Querrichtung. Der Längsstrom der Maschine ist dabei in d-Richtung des feldorientierten Bezugssystems und der Querstrom ist in q-Richtung orientiert.

Es werden nun die im Magnetfeld gespeicherte Energie gewählt und die im Magnetfeld gespeicherte Energie wird periodisch verändert, sodass sich die ausgewählte Längsstrom-Querstromkombination entlang der Kennlinie periodisch zwischen dem Punkt mit der minimalen im Magnetfeld gespeicherten Energie und dem weiteren Punkt mit der maximalen im Magnetfeld gespeicherten Energie periodisch bewegt, ohne dass sich das Drehmoment ändert. Durch das periodische Wiederholen dieses Vorgangs bewegt sich die Antriebsmaschine durchgehend zwischen den Zuständen minimaler und maximaler gespeicherter Energie im Magnetfeld, ohne das gewünschte Drehmoment zu verändern. Die für diesen Vorrang notwendige Leistung wird der Batterie entnommen bzw. wird in sie zurückgespeist und führt so zu einem gewünschten pulsierenden Stromfluss zwischen der Batterie und der Antriebsmaschine. Hierdurch wird ein Pulsheizbetrieb realisiert ohne ungewollte Drehmomentbildung der Antriebsmaschine während der Fahrt. Damit ist der Pulsheizbetrieb auch während der Fahrt ohne ungewollte Drehmomentbildung der Antriebsmaschine nutzbar. Dies geschieht durch eine energie- und drehmomentgeführte Steuerung eines Pulswechselrichters. Es wird die Energie im Magnetfeld und das Drehmoment vorgegeben, woraus sich der Längsstrom und der Querstrom ergeben.

Durch dieses Verfahren ist eine Energiependelverfahren realisiert, wobei dieses Energiependelverfahren durch eine Pendelbewegung zwischen maximaler und minimaler Energie im Magnetfeld bei vorgegebenem Drehmoment zur Erzeugung eines pulsierenden Heizstroms währen der Fahrt gekennzeichnet ist. Das Verfahren ermöglicht eine Pulsheizfunktion auch während der Fahrt durch Überlagerung des Pulses mit Betriebsströmen ohne Beeinflussung des gestellten Drehmoments.

Die Kennlinien konstanten Drehmoments sowie eines maximalen Stroms, einer maximalen Verlustleistung und/oder konstanter gespeicherter Energie im Magnetfeld der Maschine können im Vorhinein bestimmt werden. Diese Kennlinien können entweder aus einer Vermessung der E-Maschine bestimmt werden oder ergeben sich durch den Einsatz eines geeigneten Berechnungsverfahrens bspw. eines FEM-Verfahrens. Eine Kennlinie konstanten Drehmoments tangiert eine Kennlinie konstanter Energie stets genau in einer Längs- und Querstromkombination. An diesem Punkt weist die Antriebsmaschine ein Minimum an dem im Magnetfeld gespeicherter Energie für ein gegebenes Drehmoment auf. Ausgehend von diesem Punkt wird die Längs- und Querstromkombination entlang der Kennlinie konstanten Drehmoments bis zu einer maximal speicherbaren Energie bei größtmöglichem Strom verschoben. Hierbei erfolgt eine Zuordnung von Drehmomenten gespeicherter Energie zu Betrag und Phase des Statorstroms der E-Maschine.

Vorzugsweise wird der Strombetrag limitiert. Eine Limitierung des Strombetrags kann zum Schutz des Antriebs vor thermischer Überlastung dienen.

Die im Magnetfeld gespeicherte Energie wird insbesondere linear ansteigend und linear abfallend variiert, was den Vorteil hat, dass die Heizleistung maximiert wird. In besonders bevorzugter Ausgestaltung wird die Frequenz des Signalgenerators auf die maximal mögliche Heizleistung optimiert. Bevorzugt wird eine dreieckige Verlaufsform der gespeicherten Energie zur Maximierung der Heizleistung der Batterie verwendet.

Vorzugsweise wird mittels eines Signalgenerators die gespeicherte Energie variiert. Mittels des Signalgenerators werden vorzugsweise linear ansteigende und linear abfallende Signalrampen erzeugt und damit ein dreiecksförmiger Verlauf der im Magnetfeld gespeicherten Energie. Mittels des Signalgenerators wird die gespeicherte Energie manipuliert, dessen Wertebereich durch die minimale und maximale Energie der jeweiligen Drehmomentkennlinie limitiert ist.

In anderer Ausgestaltung kann die Verlaufsform der gespeicherten Energie sinusförmig oder nichtperiodisch oder statisch sein.

Es gibt nun eine Vielzahl von Möglichkeiten, das erfindungsgemäße Verfahren auszugestalten und weiterzubilden. Hierfür darf zunächst auf die dem Patentanspruch 1 nachgeordneten Patentansprüche verwiesen werden. Im Folgenden wird eine bevorzugte Ausgestaltung der Erfindung anhand der Zeichnungen und der dazugehörigen Beschreibung näher erläutert. In der Zeichnung zeigt:
Fig. 1 in einer schematischen Übersicht eine Anordnung zum Pulsheizen einer Fahrzeugbatterie während der Fahrt,

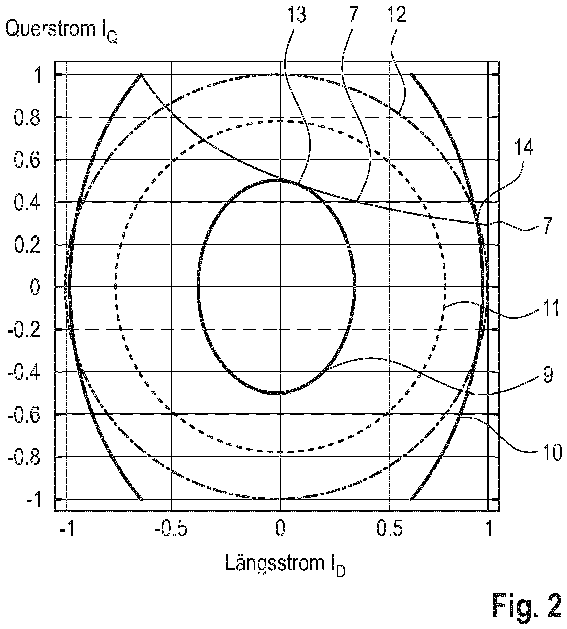

Fig. 2 in einem Diagramm mehrere Zustandsgrößen und Kennlinien in Abhängigkeit eines Querstroms und eines Längsstroms, und
Fig. 3 in einer schematischen Darstellung eine Sollstromvorgabe durch ein Kennfeld von Drehmoment und einer im Magnetfeld einer E-Maschine.

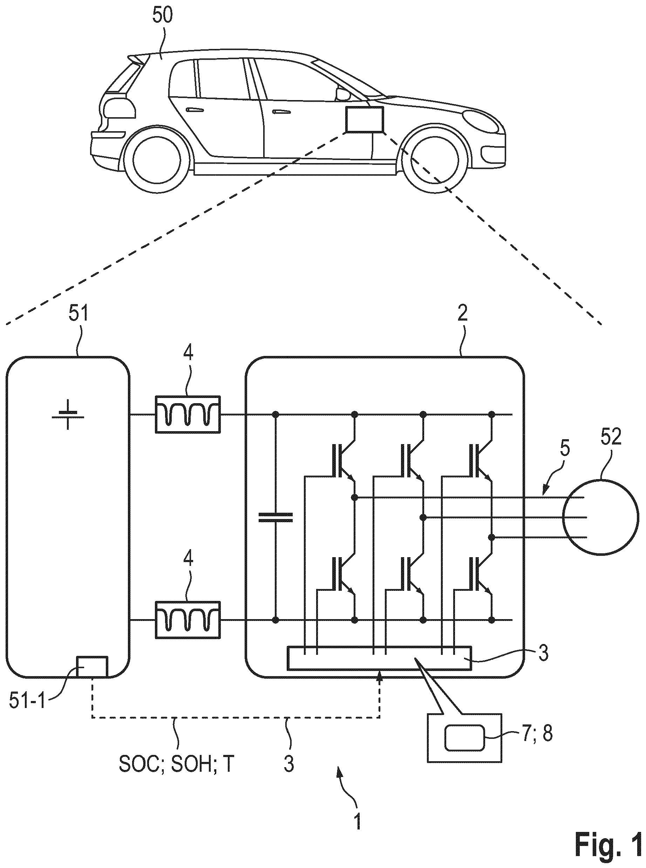

Die Fig. 1 zeigt eine schematische Darstellung einer Ausführungsform der Anordnung 1 zum Heizen einer Fahrzeugbatterie 51 eines Fahrzeugs 50. Das Fahrzeug 50 ist insbesondere ein Kraftfahrzeug, insbesondere ein Elektrofahrzeug oder ein Hybridfahrzeug. Die Fahrzeugbatterie 51 ist insbesondere eine Hochvoltbatterie, mit der ein Antriebsstrang des Fahrzeugs 50 gespeist wird. Die Fahrzeugbatterie 51 ist insbesondere eine Hochvoltbatterie, welche eine elektrische Maschine (E-Maschine) an einem Antriebsstrang speist. Grundsätzlich kann die Fahrzeugbatterie aber auch eine andere Batterie sein.

Das Fahrzeug 50 ist insbesondere ein Kraftfahrzeug, insbesondere ein Elektrofahrzeug oder ein Hybridfahrzeug. Ein Fahrzeug kann grundsätzlich aber auch ein anderes Land-, Schienen-, Wasser-, Luft- oder Raumfahrzeug sein, beispielsweise eine Drohne oder ein Lufttaxi.

Nachfolgend wird das in dieser Offenbarung beschriebene Verfahren beispielhaft anhand der Anordnung 1 beschrieben. Die Anordnung 1 umfasst einen mit der Fahrzeugbatterie 51 verbundenen (oder verbindbaren) Pulswechselrichter 2 und eine Pulswechselrichtersteuerung 3, die zum Ansteuern des Pulswechselrichters 2 eingerichtet ist.

Teile der Anordnung, insbesondere die Pulswechselrichtersteuerung 3, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind. Die Pulswechselrichtersteuerung umfasst insbesondere eine Recheneinrichtung und einen Speicher.

Die Pulswechselrichtersteuerung 3 ist ferner dazu eingerichtet, zum Heizen der Fahrzeugbatterie während einer Fahrt des Fahrzeuges 50 einem von dem Pulswechselrichter 2 bereitgestellten Antriebsstrom 5 in Abhängigkeit eines vorgegebenen Drehmomentes und einer in einem Magnetfeld der E-Maschine gespeicherten Energie so zu variieren, dass die gespeicherte Energie im Magnetfeld der E-Maschine variiert wird und so ein pulsierender Heizstrom zwischen der Batterie und der E-Maschine erzeugt wird, ohne dass das Drehmoment verändert wird.

Es wird in einem Verfahrensschritt überprüft, ob eine Temperatur der Fahrzeugbatterie des Fahrzeugs eine vorgegebene Mindesttemperatur erreicht oder nicht. Eine vorgegebene Mindesttemperatur ist beispielsweise -7°C. Grundsätzlich können aber auch andere Mindesttemperaturen vorgegeben sein, insbesondere kann auch eine Mindesttemperatur vorgegeben sein, die innerhalb eines optimalen Temperaturbereichs der Fahrzeugbatterie liegt, beispielsweise 17°C bis 25°C. Ist die Mindesttemperatur erreicht, werden keine weiteren Maßnahmen durchgeführt, sondern der Verfahrensschritt wird wiederholt. Ergibt die Überprüfung hingegen, dass die vorgegebene Mindesttemperatur nicht erreicht ist, so wird ermittelt, ob das Fahrzeug sich im Stillstand befindet oder ob das Fahrzeug fährt. Dies kann beispielsweise bei einer Fahrzeugsteuerung abgefragt werden.

Es kann vorgesehen sein, dass während der Fahrt ein Antriebsstrom ausgehend von einer Kennlinie 7 eines konstanten Drehmoments und/oder einem Kennfeld 8 gewählt wird. Die Kennlinie und das Kennfeld können von einem Ladezustand SOC und/oder einem Gesundheitszustand SOH und/oder einer Temperatur T der Fahrzeugbatterie 51 abhängen. Die Kennlinie 7 und/oder das Kennfeld 8 sind beispielsweise in einem Speicher (nicht gezeigt) der Pulswechselrichtersteuerung 3 hinterlegt. Der Ladezustand SOC und/oder der Gesundheitszustand SOH und/oder die Temperatur T werden beispielsweise von einer Batteriesteuerung 51-1 der Fahrzeugbatterie 51 bereitgestellt und der Pulswechselrichtersteuerung 3 zugeführt. Die Pulswechselrichtersteuerung 3 bestimmt dann anhand der Werte für den Ladezustand SOC und/oder den Gesundheitszustand SOH und/oder die Temperatur T mittels der Kennlinie 7 und/oder dem Kennfeld 8 die Frequenz der Pulse des Pulsmusters 4, indem Werte für die Frequenz des Pulsmusters 4 für die bereitgestellten Werte des Ladezustands SOC und/oder des Gesundheitszustands SOH und/oder der Temperatur T aus der Kennlinie 7 und/oder dem Kennfeld 8 abgerufen und/oder berechnet werden.

Während der Fahrt des Fahrzeugs 50 kann nun der erfindungsgemäße Heizbetrieb durchgeführt werden.

Fig . 2 zeigt mehrere Kennlinien der E-Maschine, nämlich die Kennlinie 7 eines konstanten Drehmoments sowie eine ellipsenförmige oder kreisförmige Kennlinie 9 einer minimalen im Magnetfeld der E-Maschine gespeicherten Energie, eine ellipsenförmige oder kreisförmige Kennlinie 10 einer maximalen im Magnetfeld der E-Maschine gespeicherten Energie eine ellipsenförmige oder kreisförmige Kennlinie 11 einer maximalen Verlustleistung und eine ellipsenförmige oder kreisförmige Kennlinie 12 eines maximalen Stroms. Diese Kennlinien der E-Maschine können im Vorhinein bestimmt werden. Diese Kennlinien können entweder aus einer Vermessung der E-Maschine bestimmt werden oder ergeben sich durch den Einsatz eines geeigneten Berechnungsverfahrens bspw. eines FEM-Verfahrens.

Das Verhalten der E-Maschine wird bei diesem Verfahren durch transformierte Statorgrößen beschrieben. Diese transformierten Statorgrößen werden durch eine d/q-Transformation bestimmt. Die Punkte der Kennlinie können jeweils durch eine Längs- und Querstromkombination beschrieben werden. Der Längststrom ist entlang der waagerechten Achse und der Querstrom ist entlang der vertikalen Achse normiert aufgetragen. Der Längs- und Querstrom der E-Maschine bezeichnen dabei Statorstromkomponenten in den beiden orthogonalen Richtungen eines feldorientierten Bezugssystems. Die d-Richtung entspricht der Längsrichtung und die q-Richtung entspricht der Querrichtung. Der Längsstrom der Maschine ist dabei in d-Richtung des feldorientierten Bezugssystems und der Querstrom ist in q-Richtung orientiert.

Es wird nun ein Punkt 13 der Kennlinie des konstanten Drehmoments bestimmt, wobei an diesem Punkt eine niedrige im Magnetfeld gespeicherte Energie, insbesondere ein Minimum an im Magnetfeld gespeicherter Energie, für das gegebene Drehmoment vorliegt. Ferner wird ein weiterer Punkt 14 auf der Kennlinie bestimmt, wobei an diesem weiteren Punkt eine höhere im Magnetfeld gespeicherte Energie, insbesondere ein Maximum am im Magnetfeld gespeicherter Energie vorliegt. Die Kennlinie 7 des konstanten Drehmomentes tangiert die Kennlinie 9 der minimalen Energie im Punkt 13 und schneidet die Kennlinie 10 der maximalen im Magnetfeld gespeicherten Energie im Punkt 14.

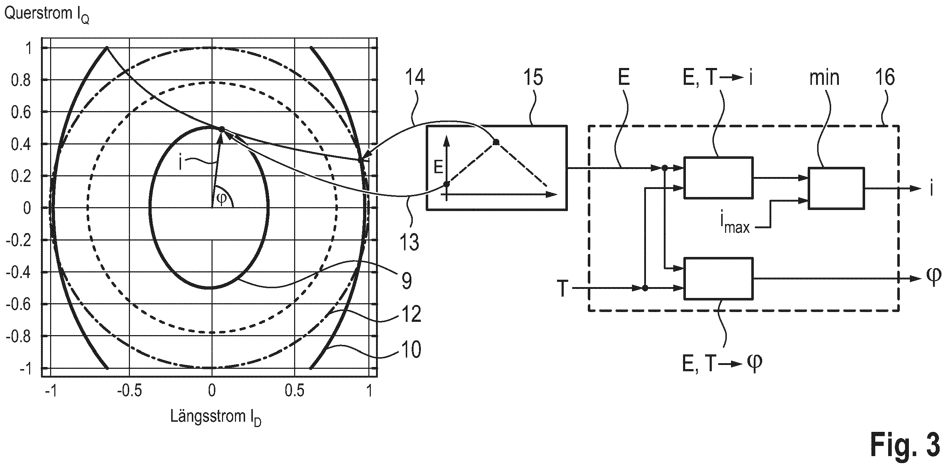

Fig 3 zeigt, dass die Kennlinie des konstanten Drehmoments 8 nun im Schritt 15 periodisch durch Vorgabe der unterschiedlichen Energiewerte E abgefahren, um so den Antriebsstrom i und die Phase ϕ zu erhalten. Der Antriebsstrom kann alternativ als Längs- und Querstrom angegeben werden.

Die Energie wird linear zeitlich zwischen dem minimalen Wert des Punktes 13 und dem maximalen Wert des Punktes 14 verändert, wodurch sich ein dreiecksverlauf ergibt. Diese lineare ansteigende und linear abfallende Veränderung der Energie hat den Vorteil, dass die Heizleistung maximiert wird.

Im nächsten Schritt 16 wird aus dem vorgegebenen Drehmoment T und der Energie E der Betrag des Antriebsstroms i und die Phase ϕ zu erhalten.

Vorzugsweise wird der Betrag des Stromes i auf einen Maximalwert iₘₐₓ begrenzt, wozu das Minimum des sich aus der Kennlinie und der vorgegebenen Energie ergebenen Strombetrag und dem Maximalwert iₘₐₓ ausgewählt wird.

Es werden nun die im Magnetfeld gespeicherte Energie gewählt und die im Magnetfeld gespeicherte Energie wird periodisch verändert, sodass sich der Antriebsstrom i mit dem Phasenwinkel ϕ entlang der Kennlinie periodisch zwischen dem Punkt 13 mit der minimalen im Magnetfeld gespeicherten Energie und dem weiteren Punkt 14 mit der maximalen im Magnetfeld gespeicherten Energie periodisch bewegt, ohne dass sich das Drehmoment ändert. Durch das periodische Wiederholen dieses Vorgangs bewegt sich die Antriebsmaschine durchgehend zwischen den Zuständen minimaler und maximaler gespeicherter Energie im Magnetfeld, ohne das gewünschte Drehmoment zu verändern. Die für diesen Vorrang notwendige Leistung wird der Fahrzeugbatterie 51 entnommen bzw. wird in sie zurückgespeist und führt so zu einem gewünschten pulsierenden Stromfluss zwischen der Fahrzeugbatterie 51 und der E-Maschine 52. Hierdurch wird ein Pulsheizbetrieb realisiert ohne ungewollte Drehmomentbildung der E-Maschine während der Fahrt. Damit ist der Pulsheizbetrieb auch während der Fahrt ohne ungewollte Drehmomentbildung der E-Maschine nutzbar. Dies geschieht durch eine energie- und drehmomentgeführte Steuerung eines Pulswechselrichters. Es wird die Energie E im Magnetfeld und das Drehmoment T vorgegeben, woraus sich der Antriebsstrom ergibt.

Durch dieses Verfahren ist eine Energiependelverfahren realisiert, wobei dieses Energiependelverfahren durch eine Pendelbewegung zwischen maximaler und minimaler Energie im Magnetfeld bei vorgegebenem Drehmoment zur Erzeugung eines pulsierenden Heizstroms währen der Fahrt gekennzeichnet ist.

### Bezugszeichenliste

1 Anordnung
2 Pulswechselrichter
3 Pulswechselrichtersteuerung
4 Pulsmuster
4-1 Ladestrom
4-2 Entladestrom
5 Antriebstrom
6-1 Ladestrom
6-2 Entladestrom
7 Kennlinie konstanten Drehmoments
8 Kennfeld
9 Kennlinie einer minimalen im Magnetfeld der E-Maschine gespeicherten Energie
10 Kennlinie einer maximalen im Magnetfeld der E-Maschine gespeicherten Energie
11 Kennlinie einer maximalen Verlustleistung
12 Kennlinie eines maximalen Stroms
13 Punkt minimaler im Magnetfeld gespeicherten Energie auf der Kennlinie des konstanten Drehmoments
14 Punkt maximaler im Magnetfeld gespeicherten Energie auf der Kennlinie des konstanten Drehmoments
15 Vorgabe der im Magnetfeld gespeicherten Energie
50 Fahrzeug
51 Fahrzeugbatterie
51-1 Batteriesteuerung
52 elektrische Maschine
SOC Ladezustand
SOH Gesundheitszustand
T Drehmoment
i Antriebsstrom
ϕ Phase des Antriebsstroms
iₘₐₓ Maximalwert des Stromes

## Patentansprüche

1. Verfahren zum Heizen einer Fahrzeugbatterie (51) eines Fahrzeugs (50) mit einer E-Maschine (52), wobei während einer Fahrt des Fahrzeuges (50) einem von dem Pulswechselrichter (2) bereitgestellten Antriebsstrom durch den Pulswechselrichter (2) der Antriebsstrom (i) gewählt wird, **dadurch gekennzeichnet, dass** der Antriebsstrom (i) in Abhängigkeit eines vorgegebenen Drehmomentes (T) und durch Vorgabe einer in einem Magnetfeld der E-Maschine gespeicherten Energie (E) so gewählt wird, dass die gespeicherte Energie (E) im Magnetfeld variiert wird und so ein pulsierender Heizstrom zwischen der Fahrzeugbatterie (51) und der E-Maschine (52) erzeugt wird, ohne dass das Drehmoment (T) verändert wird.

2. Verfahren nach Anspruch 1, **dadurch gekennzeichnet, dass** im Vorhinein eine Kennlinie konstanten Drehmoments bestimmt wird, wobei ein erster Punkt der Kennlinie bestimmt wird, wobei an dem ersten Punkt (13) eine niedrige im Magnetfeld gespeicherte Energie (E), insbesondere ein Minimum an im Magnetfeld gespeicherter Energie (E), für das gegebene Drehmoment (T) vorliegt, wobei wird ein zweiter Punkt (14) auf der Kennlinie (7) bestimmt wird, wobei an diesem weiteren Punkt eine höhere im Magnetfeld gespeicherte Energie (E), insbesondere ein Maximum am im Magnetfeld gespeicherter Energie (E) vorliegt, wobei die Energie zwischen der Energie (E) des ersten und des zweiten Punktes periodisch variiert wird.

3. Verfahren nach Anspruch 1 oder 2, **dadurch gekennzeichnet, dass** die im Magnetfeld gespeicherte Energie (E) linear ansteigend und linear abfallend variiert wird.

4. Verfahren nach einem der vorstehenden Ansprüche, **dadurch gekennzeichnet, dass** mittels eines Signalgenerators die gespeicherte Energie (E) variiert wird.

5. Verfahren nach einem der vorstehenden Ansprüche, **dadurch gekennzeichnet, dass** der Strombetrag auf einen Maximalwert (iₘₐₓ) limitiert wird.

6. Anordnung (1) zum Heizen einer Fahrzeugbatterie (51) eines Fahrzeugs (50), umfassend: einen mit der Fahrzeugbatterie (51) verbundenen oder verbindbaren Pulswechselrichter (2), und eine Pulswechselrichtersteuerung (3), eingerichtet zum Ansteuern des Pulswechselrichters (2), wobei die Pulswechselrichtersteuerung (3) dazu eingerichtet ist, zum Heizen der Fahrzeugbatterie (51) den Antriebsstrom in Abhängigkeit eines vorgegebenen Drehmomentes und durch Vorgabe einer in einem Magnetfeld der E-Maschine gespeicherten Energie so zu wählen, dass die gespeicherte Energie im Magnetfeld variiert wird und so ein pulsierender Heizstrom zwischen der Batterie (51) und der E-Maschine erzeugt wird, ohne dass das Drehmoment verändert wird.
